# EUROPEAN PATENT APPLICATION

(11) **EP 1 024 385 A1**
(43) Date of publication of application: **02.08.2000**
(21) Application number: 99917101.0
(22) Date of filing: 22.04.1999
(51) Int. Cl.: G02B 6/44

(54) **SLOTTED ROD FOR OPTICAL FIBER CABLE AND OPTICAL FIBER CABLE USING THE SLOTTED ROD**

(30) Priority: 24.04.1998 JP 11489098
(71) Applicant: The Furukawa Electric Co., Ltd., Tokyo 100-0005 (JP); Nippon Telegraph and Telephone Corporation, Tokyo 163-8019 (JP)
(72) Inventor: KOBAYASHI, Ichiro, The Furukawa Electric Co., Ltd., Tokyo 100-0005 (JP); KONDA, Eiji, The Furukawa Electric Co., Ltd., Tokyo 100-0005 (JP); HASEMI, Akio, The Furukawa Electric Co., Ltd., Tokyo 100-0005 (JP); KAMIKURA, Yasuhiro, The Furukawa Electric Co., Ltd, Tokyo 100-0005 (JP); IWATA, Hideyuki, Tokyo 163-1419 (JP)
(74) Representative: Dealtry, Brian
(86) International application number: JP9902142
(87) International publication number: WO9956164

(57) **Abstract**

Optical fiber accommodating grooves (14) are formed at the outer circumferential portion of an optical fiber accommodating portion body (12) of a slotted rod (10) for an optical fiber cable. At least portions, where the optical fiber accommodating grooves (14) are formed, of the optical fiber accommodating portion body (12) are constructed of a foaming body, whereby flexibility of the slotted rod (10) is prevented from worsening. A solid layer having a smooth surface is formed on at least the inner circumferential surface, which is brought into contact with optical fibers, of the above optical fiber accommodating grooves (14). The optical fibers are accommodated in the optical fiber accommodating grooves (14) to provide the slotted rod (19) with a shielding layer at the outside, thereby forming an optical fiber cable, wherein the optical fibers accommodated in the optical fiber accommodating grooves (14) are prevented from being bent by the walls of the grooves, and optical loss of the optical fibers can be prevented from being increased.

## Description

### TECHNICAL FIELD

The present invention relates to a slotted rod which constitutes an optical fiber cable for optical transmission, and an optical fiber cable using the slotted rod.

### BACKGROUND ARTS

There are many types of optical fiber cables, one of which is a slot type optical fiber cable. The slot type optical fiber cable has a slotted rod. The slotted rod accommodates an optical fiber and protects the optical fiber from external pressure given thereto when being produced, winding it in a factory, and laying it down or under various conditions after the same is laid, thereby preventing the optical fiber from being damaged.

Further, in the specification, an "optical fiber" is used as a word generally expressing a single optical fiber, an optical fiber assembly having a plurality of optical fibers bundled, an optical fiber ribbon in which some optical fibers are arrayed in parallel to each other and are covered with a common shield, etc.

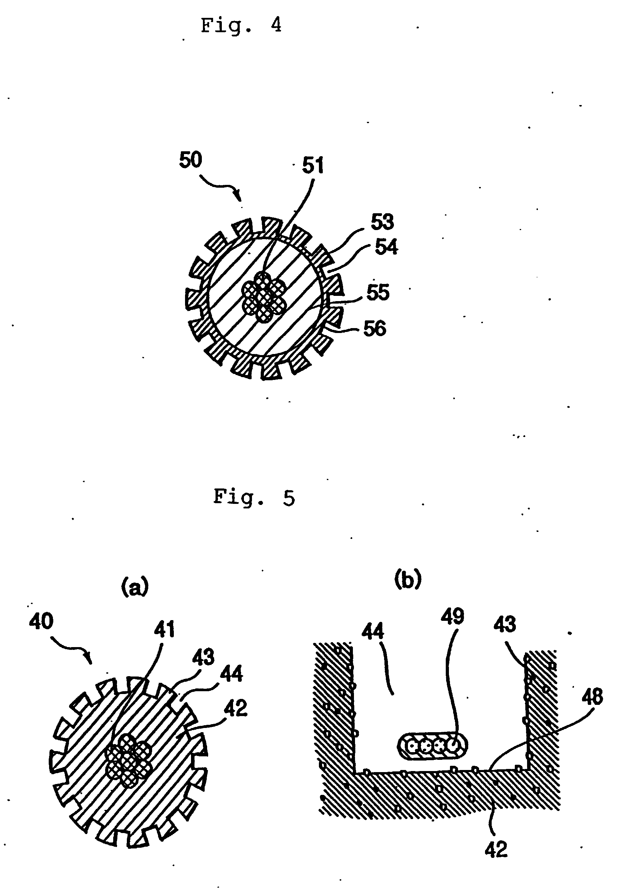

FIG. 5(a) is an exemplary sectional view of one example of a slotted rod. As shown in FIG. 5(a), a slotted rod 40 has conventionally been constructed of a tensil strength member 41 and an optical fiber accommodating body 42. The above tensil strength member 41 is constructed of FRP, steel wire, etc. In addition, the above optical fiber accommodating body 42 is produced by extrusion molding of thermoplastic resin around the tensil strength member 41. A plurality of rib portions 43 extending in radial directions from the center position are formed at the outer circumferential portion of the optical fiber accommodating body 42 and optical fiber accommodating grooves 44 between the rib portions 43. The optical fiber accommodating grooves 44 are formed spiral or wave-like in the lengthwise direction, and optical fibers are accommodated in the optical fiber accommodating grooves 44.

Recently, an increase in the quantity of optical fibers which can be accommodated in an optical fiber cable has been demanded in line with the development of transmission networks enabled by optical fibers. Within this demand, it is considered that the number of optical fibers accommodating grooves 44 are increased by making the slotted rod 40 thick, or the number of optical fibers which can be accommodated in a slotted rod 40 increased by deepening the depth of the optical fiber accommodating grooves 44 and widening the groove width of the optical fiber accommodating grooves 44. However, if the slotted rod 40 is made thick, flexibility may be lowered. If an optical fiber cable is formed by utilizing a slotted rod 40 having such an increased diameter, another problem arises, for example, whereby the optical fiber cable cannot be bent.

Therefore, as a countermeasure for increasing the diameter of the slotted rod 40 without lowering the flexibility of the slotted rod 40, it has been attempted in that the entirety of the whole optical fiber accommodating body 42 of the slotted rod 40 is constructed of foaming plastic. If the slotted rod 40 is constructed as shown above, the flexibility of the slotted rod 40 can be remarkably improved.

However, since, in a slotted rod 40 of the above construction, the optical fiber accommodating groove 44 is formed of a foaming material, as shown in FIG. 5(b), and there exists a number of projections and impressions on the inner circumferential surface 48 of the optical fiber accommodating groove 44. Therefore, optical fibers 49 accommodated in the optical fiber accommodating groove 44 are brought into contact with the inner circumferential surface 48 having the above projections and impressions, and the above optical fibers 49 are bent by the inner circumferential surface 48 having the above projections and impressions. Thereby, another problem arises, by which the optical loss of the optical fiber 49 may be increased.

A slotted rod 50 as shown in FIG. 4 has been proposed as an improvement to solve the above problems (Refer to Japanese Laid-open patent publication No. 234066 of 1996). The slotted rod 50 shown in FIG. 4 is constructed so as to comprise a tensil strength member 50, a foaming plastic layer 55, and an extreme outer layer 56. The above foaming plastic layer 55 is formed around the tensil strength member 50, and the above extreme outer layer 56 is formed outside the foaming plastic layer 55. The extreme outer layer 56 is formed to be a plastic solid layer, wherein a plurality of rib portions 53 and optical fiber accommodating grooves 54 are formed at the outer circumferential portion of the extreme outer layer 56.

In the proposed slotted rod 50, since the rib portions 53 which constitute the optical fiber accommodating grooves 54 are formed of a solid layer, the inner circumferential surface of the optical fiber accommodating grooves 54 is formed smooth, whereby such a problem as an increase in the optical loss of the optical fibers can be solved.

However, since the extreme outer layer 56 of the slotted rod 50 is formed of a solid layer, the flexibility of the slotted rod 50 becomes inferior. For this reason, for example, if the extreme outer layer 56 is thickened in order to increase the number of accommodated optical fibers, there is a fear that the flexibility of the slotted rod 50 becomes inferior, wherein still another problem arises, by which the slotted rod will become inadequate for an optical cable.

Therefore, the present invention was developed to solve the above problems, and it is therefore an object of the invention to provide a slotted rod for optical fibers, and an optical fiber cable using the same slotted rod, without increasing the optical loss of optical fibers, whose flexibility is not damaged even though the slotted rod is increased, and whose productivity is excellent.

### DISCLOSURE OF THE INVENTION

The invention is provided with the following features to achieve the above object. That is, the first aspect of a slotted rod for optical fibers according to the invention is a slotted rod which consists of a tensil strength member and an optical fiber accommodating portion body secured at the outer circumference of the corresponding tensil strength member, has a plurality of rib portions, which extend in directions radially widening from the middle portion, formed at the outer circumferential portion of the optical fiber accommodating portion body, and accommodates optical fibers in optical fiber accommodating grooves constituted between rib portions, wherein at least the above rib portions are constructed of a foaming body, and at least a portion of the corresponding rib portions, which is brought into contact with optical fibers, and is covered with a solid layer having a smooth surface.

In addition, the second aspect of a slotted rod for an optical fiber cable according to the invention is featured in that, in addition to the first aspect, the solid layer covers up the bottom planes of the optical fiber accommodating grooves.

Further, an optical fiber cable, according to the invention, is formed by using a slotted rod provided with the first or the second aspect of the slotted rod for the above optical fiber cable.

In the invention, at least the rib portions of the slotted rod are constructed of a foaming body, whereby flexibility required for a slotted rod can be secured even though the thickness of the slotted rod is increased in order to increase the number of optical fibers accommodable in the slotted rod.

Further, in the invention, the surface of the portion, which is brought into contact with at least optical fibers of the optical fiber accommodating grooves, is covered by a smooth solid layer. That is, the plane brought into contact with optical fibers in the optical fiber accommodating grooves will become a smooth surface, whereby it is possible to prevent optical fibers, which are accommodated in optical fiber accommodating grooves, from being bent by the wall plate of the optical fiber accommodating grooves, and to avoid such a problem as an increase in the optical loss of optical fibers, resulting from projections and impressions of the optical fiber accommodating grooves.

As described above, the invention can provide a slotted rod which is able to increase the number of optical fibers which can be accommodated therein, has excellent flexibility, and is further able to suppress an increase in the optical loss of optical fibers, and provides an optical fiber cable which can contribute to the construction of further development in transmission networks by optical fibers.

### BRIEF DESCRIPTION OF THE DRAWINGS

FIG.1 is an explanatory view showing a preferred embodiment according to the invention,
FIG.2 is a graph showing results of flexibility measurement of a slotted rod,
FIG. 3 is a graph showing the results of optical loss measurement of optical fibers,
FIG. 4 is an explanatory view showing a proposed example of a slotted rod, and
FIG. 5 is an explanatory view showing a conventional example of a slotted rod.

### BEST MODE FOR CARRYING OUT THE INVENTION

Hereinafter, a description is given of a preferred embodiment according to the invention with reference to the accompanying drawings.

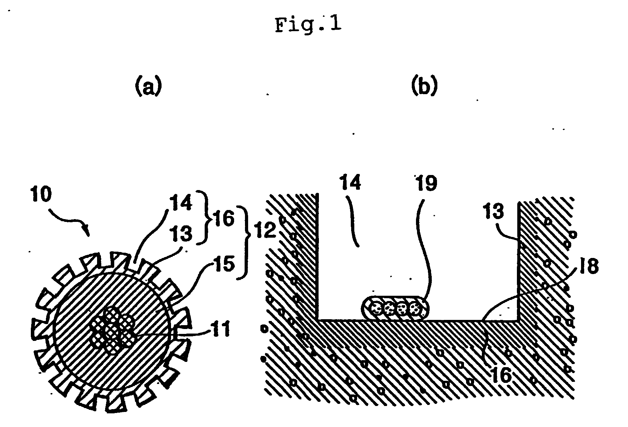

In FIG. 1(a), a slotted rod for an optical fiber cable which is characteristic of the preferred embodiment is illustrated by an exemplary sectional view, and in FIG. 1(b), an optical fiber accommodating groove of the slotted rod shown in FIG. 1 (a) is enlarged and illustrated by an exemplary sectional view.

As shown in FIG. 1(a), in the preferred embodiment, the slotted rod 10 is constructed so as to have a tensil strength member 11 and an optical fiber accommodating portion body 12. The optical fibber accommodating portion body 12 is constructed so as to have an inner layer 15 and an outer layer 16. The above inner layer 15 is provided at the outer circumference of the tensil strength member 11, and is constructed of a solid layer such as thermoplastic resin, etc.

The above outer layer 16 is formed outside the above inner layer 15 and is constructed of a foaming body such as a thermoplastic foaming body, etc. A plurality of rib portions 13 and optical fiber accommodating grooves 14 are formed at the outer circumferential portion of the outer layer 16.

As shown in FIG. 1(b), the inner circumferential surface 18 of the optical fiber accommodating grooves 14 is finished to be a smooth plane. In other words, the surface of the inner circumferential plane of the optical fiber accommodating grooves 14 is covered up by a solid layer while the inner circumferential surface 18 of the optical fiber accommodating grooves 14 is constituted to be a smooth plane.

There are various methods of finishing the above inner circumferential surface 18 so as to be smooth. For example, the above inner circumferential surface 18 is finished smooth by heat treatment, or a solid layer such as resin, etc., is coated on the inner circumferential plane of the optical fiber accommodating grooves 14 to finish the above inner circumferential surface 18 to be a smooth plane. Thus, there are various methods of finishing the above inner circumferential surface 18 to be a smooth plane, wherein any one of the methods may be used.

In addition, on the inner circumferential surface 18 of the optical fiber accommodating grooves 14, portions for the surfaces finished to be a smooth plane may be the entire area of the inner circumferential plane of the above optical fiber accommodating grooves 14, or may be the portion with which the optical fibers 19 accommodated in the optical fiber accommodating grooves 14 is brought into contact. That is, a surface smoothing treatment is employed at portions which are brought into contact with at least the optical fibers 19 and may give bending stress to the optical fibers 19.

As described above, if a surface smoothing treatment is employed on the inner circumferential surface 18 of the optical fiber accommodating grooves 14, it is possible to prevent the problem of optical loss from occurring, which results from convex and concave inner circumferential surfaces.

A slotted rod which is a characteristic of the preferred embodiment is constructed as described above, wherein the respective optical fibers 19 are accommodated in the respective optical fiber accommodating grooves 14 of the slotted rod 10 constructed as described above, and a shielding layer is provided on the outer side of the slotted rod 10, thereby constituting an optical fiber cable.

According to the preferred embodiment, the optical fiber accommodating portion body 12 of the slotted rod 10 is a double structure consisting of an inner layer 15 and an outer layer 16, wherein the above inner layer 15 consists of a solid layer and the outer layer 16 consists of a foaming body layer. Therefore, the inner layer 15 may be designed while taking only the mechanical strength of the quantity of accommodating optical fibers and the mechanical strength which is required for the slotted rod, into consideration. That is, since the inner layer 15 is constructed of a solid layer having a sufficient mechanical strength, the thickness of the inner layer 15 may become thin. In addition, the outer layer 16 may be designed in compliance with a required quantity of accommodating optical fibers, regardless of the mechanical strength. Thereby, the number of optical fibers accommodable in a slotted rod may be easily increased.

Further, in the above preferred embodiment, since, as described above, the optical fiber accommodating portion body 12 of the slotted rod 10 is of a double structure in which a foaming body layer (outer layer 16) is provided outside the solid layer (inner layer 15), it is possible to further increase the flexibility of the slotted rod 10 in comparison with that which is of a double structure having a solid layer formed outside the foaming body layer.

Further, in the preferred embodiment, since a surface smoothing treatment is applied to the inner circumferential plane 18 of the optical fiber accommodating grooves 14 at the outer layer 16 to obtain a smooth plane, and although the above outer layer 16 is constructed of a foaming body layer, it is possible to prevent the problem of increasing optical loss of optical fibers from occurring, which results from the convex and concave inner circumferential surface of the optical fiber accommodating grooves as described above.

As described above, a slotted rod for an optical fiber cable described in the preferred embodiment can easily correspond to an increase in the quantity of accommodating optical fibers, is excellent in flexibility, and can further suppress an increase in optical loss of optical fibers.

Further, the present invention is not limited to the above preferred embodiment, and may be subjected to various modes. For example, in the above preferred embodiment, although the optical fiber accommodating portion body 12 is of a double structure consisting of an inner layer 15 and an outer layer 16, at least the rib portions 13 of the optical fiber accommodating body portion 12 may be formed of a foaming body. For example, the entirety of the optical fiber accommodating portion body 12 may be constructed of a foaming body in compliance with specifications of mechanical strength, etc., of an optical fiber cable.

Hereinafter, a detailed example is described.

A slotted rod of a detailed Example 1 has such a construction as shown in FIG.1 as described above. That is, the tensil strength member 11 is made of FRP, and the outer diameter is 1.4mm. Furthermore, the inner layer 15 is molded with a polyethylene solid layer, and the thickness of the inner layer 15 is 6.0mm as shown in Table 1. In addition, the outer layer 16 is formed of a polyethylene foaming body, whose foaming ratio is 40%, and the thickness of the outer layer 16 is 14.2mm. Optical fiber accommodating grooves 14 are formed at the outer circumferential portion of the outer layer 16, and the depth and width of the optical fiber accommodating grooves 14 are, respectively, 4mm and 2.5mm as shown in Table 1. Further, a silicon resin layer having a thickness of 400µm is coated and hardened on the inner circumferential surface of the optical fiber accommodating grooves 14, and the inner circumferential surface 18 of the optical fiber accommodating grooves 14 are constructed to be a smooth plane.

**Table 1**

| | Outer diameter of the inner layer (mm) | Outer diameter of the outer layer (mm) | Depth of grooves (mm) | Width of grooves (mm) | Surface of grooves |
|---|---|---|---|---|---|
| Example 1 | 6.0 | 14.2 | 4 | 2.5 | Smooth finish |
| Example 2 | 0 | 0 | 4 | 2.5 | Smooth finish |
| Control 1 | 14.2 | 14.2 | 4 | 2.5 | |
| Control 2 | 0 | 14.2 | 4 | 2.5 | Not smoothly finished |

In a slotted rod according to detailed Example 2, the entirety of the optical fiber accommodating portion body 12 is constructed of a polyethylene foaming body, whose foaming ratio is 40%, as the outer layer 16 of the above detailed Example 1. The other construction is provided with a construction similar to that of the detailed Example 1.

In a slotted rod of Control 1 with respect to the detailed Examples 1 and 2, the entirety of the optical fiber accommodating portion body 12 is constructed of a polyethylene solid layer as in the inner layer 15 of the above detailed Example 1. The inner circumferential surface of the optical fiber accommodating grooves 14 of the optical fiber accommodating portion body 12 is a smooth plane. The other construction is provided with a construction which is similar to that of the detailed Example 1. In addition, in the slotted rod of Control 2, the entirety of the optical fiber accommodating portion body 12 is constructed of a polyethylene foaming body, whose foaming ratio is 40%, as in the outer layer 16 of the above detailed Example 1. No surface smoothing treatment is applied to the inner circumferential surface of the optical fiber accommodating grooves 14 of the optical fiber accommodating portion body 12, wherein it is a convex and concave plane. The other construction is provided with a construction which is similar to the above detailed Example 1.

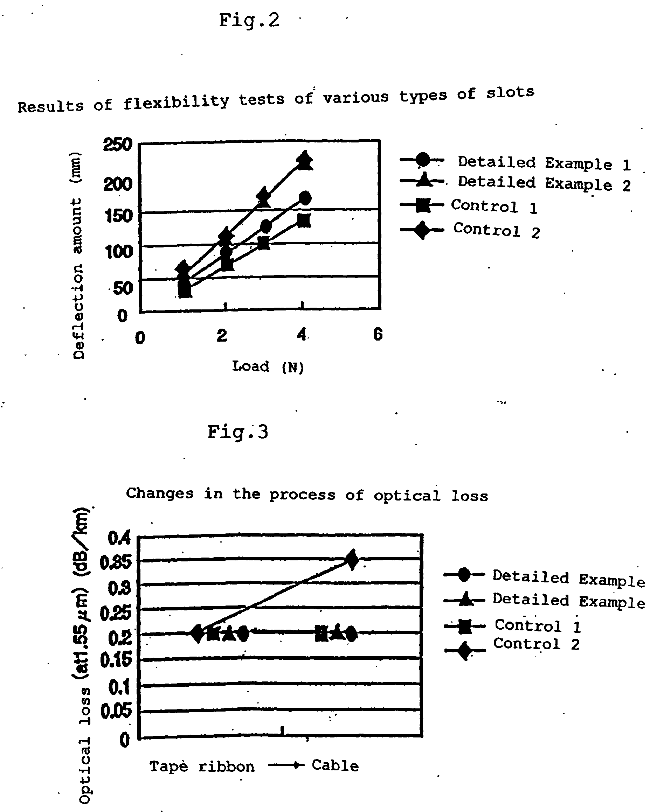

The flexibility of the above four types of slotted rods was measured as shown below. The quantity of the deflection of slotted rods was measured with a load given to one end of the slotted rods while the other end of the slotted rods, each having a sample length of 500mm, is located in a horizontal state. Results of the measurements are shown in FIG.2.

Further, an optical fiber cable 19 was produced by inserting five optical fibers (four-fiber optical fiber tape ribbons) in each of the above four types of slotted rods. In each of the above optical fibers 19, optical losses of the optical fibers 19, before and after fabricating as a cable, were measured. Results of the measurements are shown in FIG. 3.

As shown in the graph of FIG.2, detailed Example 2 and Control 2 are excellent in flexibility. Detailed Example 1 is slightly inferior in flexibility to the detailed Example 2, but considerably improved in comparison with Control 1.

As has been understood from the graph of FIG.3, in the slotted rods of detailed Examples 1 and 2, and Control 1, the optical loss of the optical fibers 19 is hardly increased in comparison with that before being fabricated as a cable. To the contrary, in the slotted rod of Control 2, the optical loss of the optical fibers 19 is greatly increased to be 0.15dB/km in comparison with that before being fabricated as a cable.

As shown in the results of the experiments of the above detailed Examples 1 and 2, slotted rods having a characteristic construction of the invention are excellent in flexibility and do not produce any increase in the optical loss of optical fibers.

Further, in each of the slotted rods according to the above detailed Examples 1 and 2, a solid layer such as a resin, etc., is coated and formed on the inner circumferential surface of the optical fiber accommodating grooves to make the inner circumferential surface of the optical fiber accommodating grooves a smooth plane. Therefore, when molding an optical fiber accommodating portion body (outer layer) by extrusion molding of a foaming body, it is not necessary that optical fiber accommodating grooves are accurately molded, whereby the extrusion molding speed of the optical fiber accommodating portion body (outer layer) can be remarkably increased, and the productivity of slotted rods can be improved.

In addition, in the above detailed Examples 1 and 2, although the foaming ratio of a foaming body layer is 40%, it is not limited to 40%. It is preferable that the foaming ratio is from 10 through 70%, depending on the mechanical strength and flexibility, and the foam diameter is 10 through 400 µm.

Further, although, in the above detailed Examples 1 and 2, a silicon resin layer is coated and formed on the inner circumferential surface of optical fiber accommodating grooves 14 as a surface smoothing treatment, it may be sufficient that thermoplastic resin and ultraviolet ray hardening resin such as UV resin, etc., other than silicon resin is coated and formed on the inner circumferential surface of optical fiber accommodating grooves 14 making the same into a solid layer having a thickness of 50 through 400 µm.

### INDUSTRIAL APPLICABILITY

As described above, in a slotted rod for an optical fiber cable, and/or an optical fiber cable using the slotted rod, according to the invention, the flexibility is improved by constructing at least rib portions of the slotted rod of a foaming body. In addition, the inner circumferential surface of optical fiber grooves is covered up by a solid layer having a smooth surface, whereby an increase in optical losses of optical fibers accommodated in the optical fiber accommodating grooves can be suppressed. Such a slotted rod for an optical fiber cable, and/or an optical fiber cable using the slotted rod, according to the invention, are able to contribute to further advanced construction of optical transmission networks.

## Claims

1. A slotted rod consisting of a tensil strength member and an optical fiber accommodating portion body secured at the outer circumference of said tensil strength member, having a plurality of rib portions formed at the outer circumferential portion of the optical fiber accommodating body portion, which extend in radially widening directions, and accommodating optical fibers in optical fiber accommodating grooves constructed between the rib portions, wherein at least said rib portions are constructed of a foaming body, and portions of said rib portions, which are brought into contact with at least optical fibers, are covered up by a solid layer having a smooth surface.

2. A slotted rod for an optical fiber cable, wherein said solid layer is covered up by the bottom plane of the optical fiber accommodating groove.

3. An optical fiber cable constructed of a slotted rod for an optical fiber cable as set forth in Claim 1 or 2.
